# EUROPÄISCHE PATENTSCHRIFT

(11) **EP 1 425 768 B1**
(45) Veröffentlichungstag und Bekanntmachung des Hinweises auf die Patenterteilung: **18.10.2006**
(21) Anmeldenummer: 02754510.2
(22) Anmeldetag: 08.08.2002
(51) Int. Cl.: H01G 9/02

(54) **ELEKTROLYTLÖSUNG FÜR KONDENSATOREN UND EIN ELEKTROLYTKONDENSATOR MIT DER ELEKTROLYTLÖSUNG SOWIE DESSEN VERWENDUNG**
ELECTROLYTE SOLUTION FOR ELECTROLYTIC CAPACITORS, ELECTROLYTIC CAPACITOR COMPRISING SAID ELECTROLYTE SOLUTION AND THE USE THEREOF
SOLUTION D'ELECTROLYTE POUR CONDENSATEURS, CONDENSATEUR ELECTROLYTIQUE COMPRENANT CETTE SOLUTION ET UTILISATION DE CE CONDENSATEUR

(30) Priorität: 30.08.2001 DE 10142100
(43) Veröffentlichungstag der Anmeldung: 09.06.2004
(73) Patentinhaber: EPCOS AG, 81669 München (DE)
(72) Erfinder: EBEL, Thomas, I-20090 Segrate / Milano 2 (IT)
(74) Vertreter: Epping - Hermann - Fischer
(86) Internationale Anmeldenummer: PCT/DE2002/002930
(87) Internationale Veröffentlichungsnummer: WO 2003/028051

(56) Entgegenhaltungen:
- DE-A- 10 038 201
- FR-A- 1 217 757
- GB-A- 2 041 646
- PATENT ABSTRACTS OF JAPAN vol. 018, no. 109 (E-1513), 22. Februar 1994 (1994-02-22) & JP 05 308039 A (HITACHI AIC INC), 19. November 1993 (1993-11-19)

## Beschreibung

Aluminiumelektrolytkondensatoren sind aufgebaut als Anordnung aus zum Beispiel einer Aluminiumkathodenfolie und einer Anodenfolie aus Aluminium, die eine dielektrisch wirkende Oxidschicht aufweist, die durch elektrochemische Verfahren direkt auf der Folie aufgebracht ist. Zwischen den Folien befindet sich eine ein- oder mehrlagige Schicht, beispielsweise aus Papier, die mit der Elektrolytlösung imprägniert wird. Die Anordnung liegt üblicherweise in Form eines auf einen Dorn gewickelten Wickels vor, der in einen Aluminiumbecher eingebaut ist.

Die Elektrolytlösungen der Elektrolytkondensatoren umfassen in der Regel ein Leitsalz auf der Basis langkettiger aliphatischer Dicarbonsäuren, sowie ein Lösungsmittel, beispielsweise Ethylenglykol siehe JP-A-05 308039.. Als Leitsalz wird beispielsweise Dodecandisäure, in der Regel in Form vom Ammoniumsalzen eingesetzt.

Diese geradkettige, aliphatische Dicarbonsäure hat allerdings den Nachteil, daß sie beispielsweise mit dem Lösungsmittel, vor allem Alkoholen, oder den Ammoniumionen reagieren kann, so daß es zu Veresterungen oder Amidbildungen kommen kann. Diese Reaktionen haben zur Folge, daß der Anteil von dissoziiertem Leitsalz in der Elektrolytlösung und damit die Leitfähigkeit der Elektrolytlösung während des Betriebs des Kondensators, insbesondere bei höheren Temperaturen, abnimmt.

Für den Einsatz der Kondensatoren bei hohen Spannungen werden Elektrolytlösungen gesucht, die eine hohe Leitfähigkeit bei maximaler Funkenspannungsfestigkeit aufweisen. Herkömmliche Elektrolytlösungen mit'Dodecandisäure und Ethylenglykol als Lösungsmittels weisen eine ungefähre Leitfähigkeit von etwa 1,9 mS/cm bei einer Funkenspannung von 430 V auf.

Ziel der vorliegenden Erfindung ist es daher, eine Elektrolytlösung anzugeben, die die Herstellung von Elektrolytkondensatoren erlaubt, die eine höhere Leitfähigkeit und verbesserte Funkenspannungscharakteristik aufweisen als herkömmliche Kondensatoren wobei gleichzeitig die genannten Nachteile von herkömmlichen Elektrolytlösungen vermieden werden.

Dieses Ziel wird erfindungsgemäß durch eine Elektrolytlösung nach Anspruch 1 erreicht. Weitere vorteilhafte Ausgestaltungen der Elektrolytlösung, sowie ein Elektrolytkondensator mit der erfindungsgemäßen Elektrolytlösung und die Verwendung des Kondensator für hohe Spannungen sind Gegenstand weiterer Ansprüche.

Eine erfindungsgemäße Elektrolytlösung besteht aus einer Komponente A), die zumindest ein Leitsalz, das das Salz einer cyclischen, unsymmetrischen Dicarbonsäure umfaßt, einschließt sowie als Komponente B) ein Lösungsmittel enthält.

Im Vergleich zu Elektrolytlösungen nach dem Stand der Technik, die langkettige aliphatische Dicarbonsäuren beziehungsweise ihre Salze als Leitsalze einsetzen, hat die erfindungsgemäße Elektrolytlösung den Vorteil, daß cyclische Dicarbonsäuren aufgrund der Ringbildung ein relativ starres Molekülgerüst aufweisen. Bei langkettigen, nicht starren Molekülen können nachteiligerweise eine Vielzahl von Konformationen auftreten, die die symmetriebrechenden Eigenschaften von Substituenten mildern. Unsymmetrische Dicarbonsäuren sind in der Regel besser löslich als symmetrische Dicarbonsäuren, so daß eine Elektrolytlösung mit höherer Leitfähigkeit resultiert.

Aufgrund der Starrheit der Grundgerüste von cyclischen Dicarbonsäuren ist es besonders vorteilhaft möglich, entweder durch Einführung von Substituenten, oder aufgrund eines bereits unsymmetrischen Grundgerüstes, unsymmetrische Dicarbonsäuren zu erhalten, was in Elektrolytlösungen mit höherer Leitfähigkeit resultiert. Häufig weisen die cyclischen, unsymmetrischen Dicarbonsäuren höhere Dipolmomente und damit höhere Polarität auf, als aliphatische langkettige Carbonsäuren mit gleicher Anzahl von Kohlenstoffatomen. Unter unsymmetrischen Dicarbonsäuren im Sinne der Erfindung werden nicht symmetrische Dicarbonsäuren verstanden, die außer der Identität E kein weiteres Symmetrieelement aufweisen. In diesem Zusammenhang wird vollinhaltlich auf das Kapitel. "Die Symmetrie: Beschreibung und Anwendung" in P. W. Atkins: Physikalische Chemie",VCH-Verlagsgesellschaft Weinheim, 1990, 2. korrigierter Nachdruck der 1. Auflage, verwiesen.

Die relativ starren Grundgerüste der cyclischen, unsymmetrischen Dicarbonsäuren schirmen darüber hinaus aufgrund sterischer Effekte die Carboxylatgruppen gegenüber möglichen Reaktionspartnern, wie beispielsweise Alkoholen oder Aminen ab. Deshalb ist die bereits in der Beschreibung genannte Veresterungsreaktion beziehungsweise Amidbildung bei den erfindungsgemäßen cyclischen, unsymmetrischen Dicarbonsäuren stark verlangsamt, so daß erfindungsgemäße Elektrolyte im Vergleich zu herkömmlichen Elektrolyten eine bessere Langzeitstabilität bei gleichbleibender Leitfähigkeit aufweisen.

Für eine gute Funkenspannungscharakteristik des Kondensators ist es darüber hinaus notwendig, daß die dielektrische Oxidschicht, die Formierschicht auf den Elektroden während des Betriebs des Kondensators erhalten bleibt. Dazu ist es nötig, große, langkettige schwache organische Säuren als Leitsalze einzusetzen, die während des Betriebs des Kondensators nicht in die Oxidschicht eingebaut werden können und darüberhinaus Formierfähigkeit besitzen, d. h. den Aufbau der Oxidschicht während des Betriebs des Kondensators unterstützen, so daß ein Durchbruch der Oxidschicht und damit ein Funkenschlag verhindert werden kann.

Da es sich bei den cyclischen, unsymmetrischen Dicarbonsäuren auch um schwache organische Säuren mit großen Grundgerüsten handelt, sind sie gleichzeitig in der Lage, während des Betriebs des Kondensators die dielektrische Oxidschicht auf den Elektroden des Kondensators zu regenerieren (Formierfähigkeit).

Salze der cyclischen, unsymmetrischen Dicarbonsäuren lassen sich in der Regel dadurch bilden, daß die freie Dicarbonsäure mit einer Base, beispielsweise Ammoniak oder Aminen, umgesetzt wird, so daß das Salz gebildet wird. Das Lösungsmittel wirkt disoziierend auf die Salze der cyclischen Dicarbonsäuren.

Vorteilhafterweise verwendet man mono-, di- tri- oder polycyclische, unsymmetrische Carbonsäuren, wobei bei steigender Anzahl von cyclischen Kohlenstoffringen die Starrheit des Gerüstes zunimmt. Es ist dabei möglich auch Mischungen verschiedener cyclischer, unsymmetrischer Dicarbonsäuren für die erfindungsgemäßen Elektrolytlösungen zu verwenden.

Vorteilhafterweise werden als Komponente A) monocyclische Dicarbonsäuren mit der folgenden allgemeinen Formel verwendet, unter der Maßgabe, daß symmetrische Dicarbonsäuren ausgeschlossen sind: 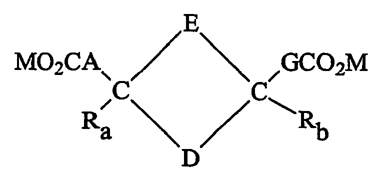
- wobei E und D gleich oder verschieden voneinander sind und ausgewählt sind aus einer Gruppe (CR¹⁰R¹¹)ₙ mit 0 ≤ n ≤ 4 wobei die Summe der beiden Indizes n ungleich der Zahl 0 ist und n eine ganze Zahl bedeutet wobei die Reste R¹⁰ und R¹¹ gleich oder verschieden voneinander sind und aus einer Menge ausgewählt ist, die die folgenden Substituenten enthält:
   a) einem Wasserstoff
   b) eine Alkylgruppe mit 1 bis 12 Kohlenstoffatomen, die gegebenenfalls verzweigt ist,
   c) eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt können,
   d) eine Alkoxygruppe mit 1 bis 12 Kohlenstoffatomen,
- wobei A und G gleich oder verschieden voneinander sind und ausgewählt sind aus der Gruppe (CR¹²R¹³)m mit 0 ≤ m ≤ 10, wobei m eine ganze Zahl bedeutet, wobei die Reste R¹² und R¹³ gleich oder verschieden voneinander sind und aus einer Menge ausgewählt sind, die die folgenden Gruppen oder Atome enthält:
   a) Wasserstoff
   b) eine Alkylgruppe mit 1 bis 12 Kohlenstoffatomen, die gegebenenfalls verzweigt ist,
   c) eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
   d) eine Alkoxygruppe mit 1 bis 12 Kohlenstoffatomen,
- wobei Rₐ und R_{b} gleich oder verschieden voneinander sind und aus einer Menge ausgewählt sind, die folgende Substituenten enthält:
   a) eine Alkylgruppe mit 1 bis 12 Kohlenstoffatomen, die gegebenenfalls verzweigt ist,
   b) eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
   c) eine Alkoxygruppe mit 1 bis 12 Kohlenstoffatomen,
- wobei M ausgewählt ist aus der Menge folgender Gegenionen:
   a) Wasserstoffion,
   b) Ammoniumionen, NH4⁺ und/oder organische alkylsubstituierte Ammoniumionen.

Vorzugsweise handelt es sich bei diesen Verbindungen um Dicarbonsäuren, die wenigstens eine der folgenden Dicarbonsäuren, ausgenommen symmetrische Dicarbonsäuren, enthalten:
a) Dicarbonsäuren der allgemeinen Formel 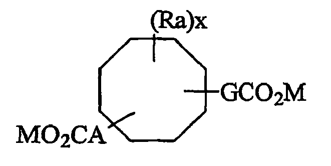 mit 0 ≤ x ≤ 7
   Wobei x eine ganze Zahl bedeutet
b) Dicarbonsäuren mit der folgenden allgemeinen Formel 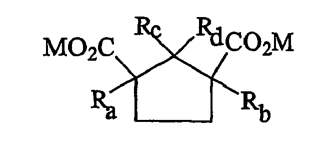
wobei M, A, G, Rₐ und R_{b} die vorstehende Bedeutung haben und R_{c} und R_{d} aus den bereits für Rₐ und R_{b} genannten Menge ausgewählt sind.

Insbesondere werden als Verbindungen Camphersäure und Cyclooctadiendicarbonsäure sowie deren Salze eingesetzt. Unter Cyclooctadiendicarbonsäure im Sinne der Erfindung werden Tetrahydrocyclooctadiendicarbonsäure und ihre Salze verstanden.

Als polycyclische Dicarbonsäuren lassen sich beispielsweise Dicarbonsäuren mit den folgenden allgemeinen Formeln, ausgenommen symmetrische Dicarbonsäuren, verwenden:
a) der folgenden Formel 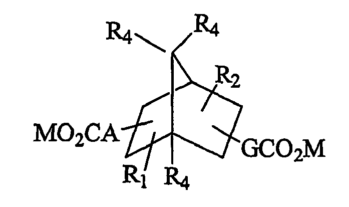 und/oder
b) Dicarbonsäuren der folgenden Formel

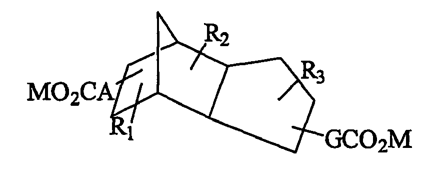

- Wobei bei beiden Formeln A und G gleich oder verschieden voneinander sind und für eine bivalente Gruppe (CR¹²R¹³)m mit 0 ≤ m ≤ 10 stehen, bei der m eine ganze Zahl bedeutet, wobei die Reste R¹² und R¹³ gleich oder verschieden voneinander sind und aus der Menge ausgewählt sind, die die folgenden Substituenten oder Atome enthält:
   a) Wasserstoff
   b) eine Alkylgruppe mit 1 bis 12 Kohlenstoffatomen, die gegebenenfalls verzweigt ist,
   c) eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
   d) eine Alkoxygruppe mit 1 bis 12 Kohlenstoffatomen,
- wobei bei beiden Formeln R¹, R², R³ und R⁴ gleich oder verschieden voneinander sind und ausgewählt sind aus einer Menge, die die folgenden Substituenten enthält:
   a) Wasserstoff,
   b) eine Alkylgruppe mit 1 bis 12 Kohlenstoffatomen, die gegebenenfalls verzweigt ist,
   c) eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
   d) eine Alkoxygruppe mit 1 bis 12 Kohlenstoffatomen und
- wobei bei beiden Formeln M ausgewählt ist aus der Menge folgender Gegenionen:
   a) Wasserstoffion
   b) quaternäre Ammoniumionen, NH4⁺ und/oder organische alkylsubstituierte Ammoniumionen.

Bei der zuletzt gezeigten Formel handelt es sich um Derivate der Dicyclopentandicarbonsäure. Unter Dicyclopentandicarbonsäure im Sinne der Erfindung werden Tetrahydrodicyclopentandicarbonsäure und ihre Salze gemäß der folgenden allgemeinen Formel verstanden: 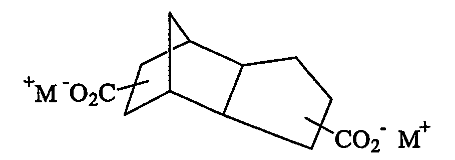 wobei M⁺ ausgewählt ist aus der Menge folgender Gegenionen:
a) Wasserstoffkation
b) quaternäre Ammoniumionen, NH4⁺ und/oder organische alkylsubstituierte Ammoniumionen.

Aufgrund des in diesem Fall besonders ausgeprägt unsymmetrischen Molekülgerüsts, resultiert eine besonders hohe Löslichkeit dieser Salze in den Lösungsmitteln und damit eine besonders hohe Leitfähigkeit bei gleichzeitig guter Funkenspannungsfestigkeit. Synthesebedingt variiert die Stellung der beiden Carboxylat-Gruppen am cyclischen Grundkörper, so daß erfindungsgemäße Elektrolytlösungen auch Mischungen von verschiedenen Isomeren der Dicyclopentandicarbonsäure umfassen können.

Als Komponente B) werden vorteilhafterweise zweiwertige Alkohole, beispielsweise Ethylenglykol, Diethylenglykol oder Propylenglykol verwendet. Möglich ist es auch, Mischungen verschiedener Alkohole zu verwenden. Ferner finden auch zyklische Ester, beispielsweise Gamma-Butyrolacton als Lösungsmittel Verwendung.

Vorteilhafterweise können als zusätzliche Komponente C) auch Borsäurederivate, beispielsweise Ammoniumpentaborat verwendet werden. Diese Verbindung dient vor allem als Formiersalz zur Erhaltung der dielektrischen Oxidschicht auf den Elektroden des Kondensators, wirkt aber gleichzeitig auch als Leitsalz, da es in den Lösungsmitteln disoziiert. Als weiterer Bestandteil der Komponente C) läßt sich auch Mannit verwenden, das korrosionsinhibierend wirkt und gleichzeitig eine zusätzliche weitere Erhöhung der Funkenspannung bewirkt.

Die erfindungsgemäßen cyclischen Dicarbonsäuren als Komponente A) werden in der Regel in einem Anteil an der Elektrolytlösung von 1 bis 15 Gew.-% eingesetzt, wobei ein Bereich von 3 bis 8 Gew.-% bevorzugt wird. Die Borate werden in der Regel in einem Anteil an der Elektrolytlösung von 2 bis 20 Gewichts.% eingesetzt.

Im folgenden wird die erfindungsgemäße Elektrolytlösung anhand eines Ausführungsbeispiels und einer Figur eines Elektrolytkondensators mit der erfindungsgemäßen Elektrolytlösung näher erläutert.

In der folgenden Tabelle wird eine erfindungsgemäße Elektrolytlösung auf der Basis von Diammoniumdicyclopentandioat, dem Diammonium-Salz der Tetrahydrodicyclopentandicarbonsäure, (Beispiel 1) mit einer herkömmlichen Elektrolytlösung mit Diammoniumdodecanat als Leitsalz (Beispiel 2) hinsichtlich ihrer Zusammensetzung und ihrer elektrischen Kenndaten, der Leitfähigkeit und der Funkenspannung gegenübergestellt.

| | Beispiel 1 | Beispiel 2 |
|---|---|---|
| Ethylenglykol | 89 | 89 |
| [Gew.%] | | |
| Diammoniumdodecanat | - | 5 |
| [Gew.%] | | |
| Diammoniumdicyclopentandioat < | 5 | - |
| [Gew.%] | | |
| Ammoniumpentaborat | 4 | 4 |
| [Gew.%] | | |
| Mannit | 2 | 2 |
| [Gew.%] | | |
| Leitfähigkeit | 2,0 | 1,9 |
| [mS/cm] | | |
| Funkenspannung | 445 | 430 |
| [V] | | |

Die Tabelle zeigt, daß durch Verwendung von Diammoniumdicyclopentandioat anstelle von Diammoniumdodecanat eine verbesserte Leitfähigkeit bei erhöhter Funkenspannung erzielt werden kann. Gleichzeitig zeigten Langzeittests, daß die hier genannte erfindungsgemäße Elektrolytlösung mit dem Diammoniumdicyclopentandioat bei einem Betrieb von länger als 2000 Stunden formierfähig bleibt und damit die dielektrische Oxidschicht erhalten werden kann.

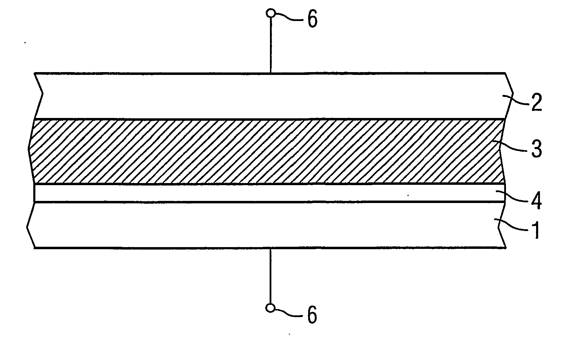

Die Figur zeigt beispielhaft einen Wickel eines Aluminiumelektrolytkondensators im schematischen Querschnitt.

Der Wickel des Elektrolytkondensators besteht aus einer Anodenschicht 1, die an ihrer Oberseite einen Anodenoxidschicht 4 aufweist. Die Anodenschicht 1 ist eine Aluminiumfolie von zirka 50 bis 120 µm Dicke. Die Anodenoxidschicht 4 besteht aus Aluminiumoxid und weist eine Dicke zwischen 5 und 1000 nm auf.

Über der Anodenoxidschicht 4 ist eine Trennschicht angeordnet. Die Trennschicht 3 hat eine Dicke zwischen 30 und 200 µm und besteht vorzugsweise aus Papier. Über der Trennschicht 3 ist eine Kathodenschicht 2 angeordnet. Die Trennschicht 3 ist mit dem erfindungsgemäßen Betriebselektrolyten getränkt. Die Anodenschicht 1 und die Kathodenschicht 2 sind jeweils mit einem Kondensatoranschluss 6 elektrisch leitend verbunden. Der Kondensatorwickel wird üblicherweise in einen Aluminiumbecher eingebaut.

Die Elektrolytkondensatorem mit den erfindungsgemäßen Elektrolytlösungen lassen sich für Hochspannungsbereiche mit Nennspannungen zwischen 350 und 600 Volt einsetzen.

## Patentansprüche

1. Elektrolytlösung für Kondensatoren mit folgenden Komponenten:
A) zumindest ein Salz einer cyclischen, unsymmetrischen Dicarbonsäure,
B) zumindest ein Lösungsmittel.

2. Elektrolytlösung nach Anspruch 1,
- bei der Komponente A) aus einer Menge ausgewählt ist, die mono-, di-, tri- und polycyclische Dicarbonsäuren enthält.

3. Elektrolytlösung nach einem der vorhergehenden Ansprüche,
- bei der Komponente A) ausgewählt ist aus einer Gruppe von monocyclischen Dicarbonsäuren der folgenden, allgemeinen Formel, ausgenommen symmetrische Dicarbonsäuren: 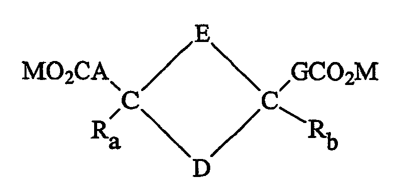
- wobei E und D gleich oder verschieden voneinander sind und ausgewählt sind aus einer bivalente Gruppe (CR¹⁰R¹¹)ₙ mit 0 ≤ n ≤ 4, wobei die Summe der beiden Indices n ungleich der Zahl 0 ist und bei der die Reste R¹⁰ und R¹¹ gleich oder verschieden voneinander sind und ausgewählt sind aus einer Gruppe, die die folgenden Substituenten oder Atome enthält:
a) einen Wasserstoff,
b) eine Alkylgruppe mit 1 bis 12 Kohlenstoffatomen, die gegebenenfalls verzweigt ist,
c) eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
d) eine Alkoxygruppe mit 1 bis 12 Kohlenstoffatomen,
- wobei A und G gleich oder verschieden voneinander sind und ausgewählt sind aus einer Menge der bivalenten Gruppe (CR¹²R¹³)ₘ mit 0 ≤ m ≤ 10 , bei der die Reste R¹² und R¹³ gleich oder verschieden voneinander sind und aus einer Menge ausgewählt sind, die die folgenden Gruppen enthält,
a) Wasserstoff,
b) eine Alkylgruppe mit 1 bis 12 Kohlenstoffatomen, die gegebenenfalls verzweigt ist,
c) eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
d) eine Alkoxygruppe mit 1 bis 12 Kohlenstoffatomen,
- wobei Rₐ und R_{b} gleich oder verschieden voneinander sind und aus einer Menge ausgewählt sind, die die folgenden Substituenten enthält:
a) eine Alkylgruppe mit 1 bis 12 Kohlenstoffatomen, die gegebenenfalls verzweigt ist,
b) eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
c) eine Alkoxygruppe mit 1 bis 12 Kohlenstoffatomen,
- wobei M ausgewählt ist aus der Menge folgender Gegenionen:
a) Wasserstoff,
b) Ammoniumionen, NH4⁺ und/oder organische, alkylsubstituierte Ammoniumionen.

4. Elektrolytlösung nach einem der vorhergehenden Ansprüche,
- bei der Komponente A) ein Salz wenigstens einer der folgenden cyclischen Dicarbonsäuren, ausgenommen symmetrische Dicarbonsäuren, enthält,
a) Dicarbonsäuren der allgemeinen Formel I, 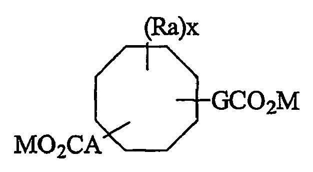 Mit 0 ≤ x ≤ 7
b) Dicarbonsäuren mit der folgenden allgemeinen Formel II, 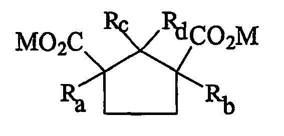
Wobei M, A, G Ra und Rb die vorstehende Bedeutung haben und R_{c} und R_{d} aus der bereits für Rₐ und R_{b} genannten Menge ausgewählt sind.

5. Elektrolytlösung nach einem der Ansprüche 1 bis 3,
- bei der Komponente A) Camphersäure und/oder Cyclooctadiendicarbonsäure umfaßt.

6. Elektrolytlösung nach einem der Ansprüche 1 oder 2,
- bei der Komponente A) ein Salz wenigstens eines der folgenden polycyclischen Dicarbonsäuren enthält, unter der Maßgabe, daß symmetrische Dicarbonsäuren ausgeschlossen sind:
a) Dicarbonsäuren der folgenden Formel, 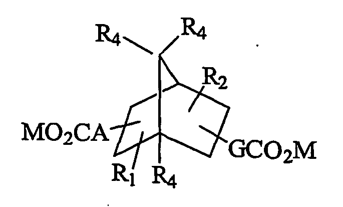
b) Dicarbonsäuren der folgenden Formel, 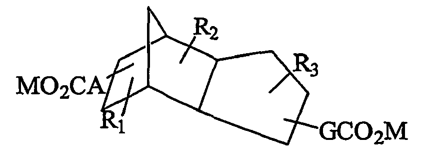
Wobei bei beiden Formeln gilt:
- A und G sind gleich oder verschieden voneinander und stehen für eine bivalente Gruppe (CR¹²R¹³)ₘ mit 0 ≤ m ≤ 10, bei der die Reste R¹² und R¹³ gleich oder verschieden sind und aus einer Menge, die die folgenden Substituenten enthält, ausgewählt sind:
a) Wasserstoff,
b) einer Alkylgruppe mit 1 bis 12 Kohlenstoffatomen, die gegebenenfalls verzweigt ist,
c) einer Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
d) oder einer Alkoxygruppe mit 1 bis 12 Kohlenstoffatomen,
- R1, R2, R3 und R4 sind gleich oder verschieden voneinander und sind aus einer Menge ausgewählt, die die folgenden Gruppen enthält:
a) Wasserstoff,
b)eine Alkylgruppe mit 1 bis 12 Kohlenstoffatomen, die gegebenenfalls verzweigt ist,
c)eine Arylgruppe mit 5 bis 12 Kohlenstoffatomen, die gegebenenfalls substituiert ist und bei der ein oder mehrere Kohlenstoffatome durch Stickstoff, Schwefel und/oder Sauerstoff ersetzt sein können,
d)oder eine Alkoxygruppe mit 1 bis 12 Kohlenstoffatomen und
- M ausgewählt ist aus der Menge folgender Gegenionen
a) Wasserstoffion,
b) quartenäre Ammoniumionen, NH4⁺ und/oder organische, alkylsubstituierte Ammoniumionen.

7. Elektrolytlösung nach einem der vorherigen Ansprüche,
- bei der Komponente B) zweiwertige Alkohole oder zyklische Ester umfaßt.

8. Elektrolytlösung nach dem vorhergehenden Anspruch,
- bei der Komponente B) Ethylenglykol, Propylenglykol oder Gamma-Butyrolacton umfaßt.

9. Elektrolytlösung nach einem der vorhergehenden Ansprüche,
- bei der als zusätzliche Komponente C) Ammoniumpentaborat vorhanden ist.

10. Elektrolytlösung nach dem vorhergehenden Anspruch,
- bei der zusätzlich in Komponente C) Mannit vorhanden ist.

11. Elektrolytlösung nach einem der vorherigen Ansprüche,
- bei der Komponente A) in einem Anteil an der Elektrolytlösung von 1 bis 15 Gewichts% vorhanden ist.

12. Elektrolytlösung nach dem vorhergehenden Anspruch,
- bei der Komponente A) in einem Anteil an der Elektrolytlösung von 3 bis 8 Gewichts% vorhanden ist.

13. Elektrolytlösung nach Anspruch 10,
- bei der Komponente A) Diammoniumdicyclopentandioat umfaßt,
- bei der Komponente B) Ethylenglykol umfaßt,
- bei der Komponente C) Ammoniumpentaborat und Mannit umfaßt.

14. Elektrolytkondensator, mit einer Elektrolytlösung nach einem der vorhergehenden Ansprüche, der einen Wickel mit einer Anoden- (1) und einer Kathodenschicht (2) sowie einer dazwischenliegenden, mit der Elektrolytlösung getränkten Trennschicht (3) aufweist, bei dem die Anoden- (1) auf ihrer der Trennschicht (3) zugewandten Seite eine Oxidschicht (4) aufweist.

15. Verwendung eines Elektrolytkondensators nach dem vorhergehenden Anspruch
- für einen Spannungsbereich mit Nennspannungen zwischen 350 und 600 Volt.

## Claims

1. Electrolyte solution for capacitors which comprises the following components:
A) at least one salt of a cyclic asymmetrical dicarboxylic acid,
B) at least one solvent.

2. Electrolyte solution according to Claim 1,
- wherein said component A) is selected from a set which contains mono-, di-, tri- and polycyclic dicarboxylic acids.

3. Electrolyte solution according to either of the preceding claims,
- wherein said component A) is selected from a group of monocyclic dicarboxylic acids of the following general formula except symmetrical dicarboxylic acids: 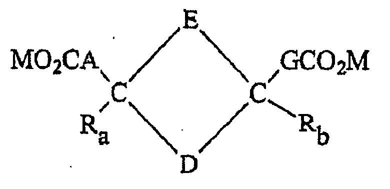
- where E and D are identical or different from each other and are selected from a bivalent group (CR¹⁰R¹¹)ₙ where 0 ≤ n ≤ 4 subject to the proviso that the sum total of the two n indices is not equal to 0, and wherein R¹⁰ and R¹¹ are identical or different from each other and are selected from a group which contains the following substituents or atoms:
a) one hydrogen,
b) one alkyl group of 1 to 12 carbon atoms which is optionally branched,
c) one aryl group of 5 to 12 carbon atoms which is optionally substituted and wherein one or more carbon atoms may be replaced by nitrogen, sulfur and/or oxygen,
d) one alkoxy group of 1 to 12 carbon atoms,
- where A and G are identical or different from each other and are selected from a set of the bivalent group (CR¹²R¹³)ₘ where 0 ≤ m ≤ 10, wherein R¹² and R¹³ are identical or different from each other and are selected from a set which contains the following groups:
a) hydrogen,
b) one alkyl group of 1 to 12 carbon atoms which is optionally branched,
c) one aryl group of 5 to 12 carbon atoms which is optionally substituted and wherein one or more carbon atoms may be replaced by nitrogen, sulfur and/or oxygen,
d) one alkoxy group of 1 to 12 carbon atoms,
- where Rₐ and R_{b} are identical or different from each other and are selected from a set which contains the following substituents:
a) one alkyl group of 1 to 12 carbon atoms which is optionally branched,
b) one aryl group of 5 to 12 carbon atoms which is optionally substituted and wherein one or more carbon atoms may be replaced by nitrogen, sulfur and/or oxygen,
c) one alkoxy group of 1 to 12 carbon atoms,
- where M is selected from a set of the following counterions:
a) hydrogen,
b) ammonium ions, NH4⁺ and/or organic alkyl-substituted ammonium ions.

4. Electrolyte solution according to any one of the preceding claims,
- wherein said component A) contains a salt of at least one of the following cyclic dicarboxylic acids except symmetrical dicarboxylic acids,
a) dicarboxylic acids of the general formula I 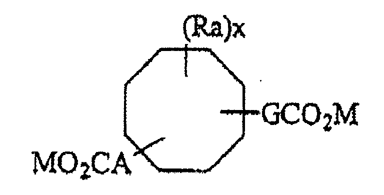 where 0 ≤ x ≤ 7
b) dicarboxylic acids having the following general formula II 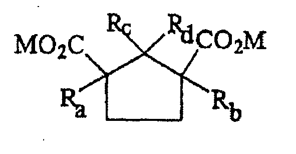
where M, A, G, Ra and Rb are each as defined above and R_{c} and R_{d} are selected from the set already mentioned for Rₐ and R_{b}.

5. Electrolyte solution according to any one of Claims 1 to 3,
- wherein said component A) comprises camphoric acid and/or cyclooctadienedicarboxylic acid.

6. Electrolyte solution according to either of Claims 1 and 2,
- wherein said component A) contains a salt of at least one of the following polycyclic dicarboxylic acids subject to the proviso that symmetrical dicarboxylic acids are excluded:
a) dicarboxylic acids of the following formula 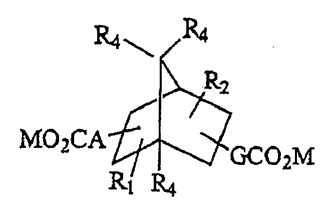
b) dicarboxylic acids of the following formula 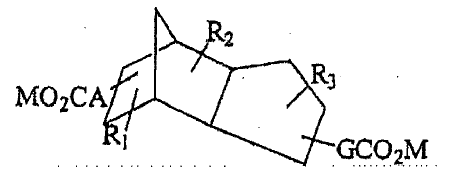
where in each of which formulae:
- A and G are identical or different from each other and are a bivalent group (CR¹²R¹³)ₘ where 0 ≤ m ≤ 10, wherein R¹² and R¹³ are identical or different from each other and are selected from a set which contains the following substituents:
a) hydrogen,
b) one alkyl group of 1 to 12 carbon atoms which is optionally branched,
c) one aryl group of 5 to 12 carbon atoms which is optionally substituted and wherein one or more carbon atoms may be replaced by nitrogen, sulfur and/or oxygen,
d) or one alkoxy group of 1 to 12 carbon atoms,
- R1, R2, R3 and R4 are identical or different from each other and are selected from a set which contains the following groups:
a) hydrogen,
b) one alkyl group of 1 to 12 carbon atoms which is optionally branched,
c) one aryl group of 5 to 12 carbon atoms which is optionally substituted and wherein one or more carbon atoms may be replaced by nitrogen, sulfur and/or oxygen,
d) or one alkoxy group of 1 to 12 carbon atoms, and
- M is selected from the set of the following counterions
a) hydrogen ion,
b) quaternary ammonium ions, NH4⁺ and/or organic alkyl-substituted ammonium ions.

7. Electrolyte solution according to any one of the previous claims,
- wherein said component B) comprises bifunctional alcohols or cyclic esters.

8. Electrolyte solution according to the preceding claim,
- wherein said component B) comprises ethylene glycol, propylene glycol or gamma-butyrolactone.

9. Electrolyte solution according to any one of the preceding claims,
- wherein ammonium pentaborate is present as an additional component C).

10. Electrolyte solution according to the preceding claim,
- wherein mannitol is additionally present in said component C).

11. Electrolyte solution according to any one of the previous claims,
- wherein said component A) comprises from 1% to 15% by weight of the electrolyte solution.

12. Electrolyte solution according to the preceding claim,
- wherein said component A) comprises from 3% to 8% by weight of the electrolyte solution.

13. Electrolyte solution according to claim 10,
- wherein said component A) comprises diammonium dicyclopentanedioate,
- wherein said component B) comprises ethylene glycol,
- wherein said component C) comprises ammonium pentaborate and mannitol.

14. Electrolytic capacitor having an electrolyte solution according to any one of the preceding claims, said electrolytic capacitor comprising a coil having an anode layer (1) and a cathode layer (2) and also an interleaved separating layer (3) which is saturated with said electrolyte solution, in which electrolytic capacitor said anode layer (1) has an oxide layer (4) on the side which faces said separating layer (3).

15. Use of an electrolytic capacitor according to the preceding claim
- for a voltage range having nominal voltages between 350 and 600 volts.

## Revendications

1. Solution d'électrolyte pour des condensateurs ayant des constituants suivants :
A) au moins un sel d'un acide dicarboxylique cyclique dissymétrique,
A) au moins un solvant.

2. Solution d'électrolyte suivant la revendication 1,
- dans laquelle le constituant A) est choisi dans un groupe qui comporte des acides dicarboxyliques monocycliques, dicycliques, tricycliques et polycycliques.

3. Solution d'électrolyte suivant l'une des revendications précédentes,
- dans laquelle le constituant A) est choisi dans un groupe d'acides dicarboxyliques monocycliques ayant la formule générale suivante, à l'exception des acides dicarboxyliques symétriques : 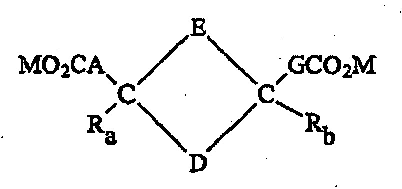
- dans laquelle E et D sont identiques ou différents l'un de l'autre et sont choisis parmi un groupe (CR¹⁰R¹¹)ₙ bivalent avec 0 ≤ n ≤ 4, la somme des deux indices n étant différente de 0 et dans laquelle les radicaux R¹⁰ et R¹¹ sont identiques ou différents l'un de l'autre et sont choisis dans un groupe qui comporte les substituants ou atomes suivants :
a) un hydrogène,
a) un groupe alcoyle ayant de 1 à 12 atomes de carbone qui est éventuellement ramifié,
a) un groupe aryle ayant de 5 à 12 atomes de carbone qui est éventuellement substitué et dans lequel un ou plusieurs atomes de carbone peuvent être remplacés par de l'azote, du soufre et/ou de l'oxygène,
a) un groupe alcoxy ayant de 1 à 12 atomes de carbone,
- A et G étant identiques ou différents l'un de l'autre et étant choisis parmi des groupes bivalents (CR¹²R¹³)ₘ avec 0 s m ≤ 10, dans laquelle les radicaux R¹² et R¹³ sont identiques ou différents l'un de l'autre et sont choisis parmi les groupes suivants :
a) l'hydrogène,
a) un groupe alcoyle ayant de 1 à 12 atomes de carbone qui est éventuellement ramifié,
a) un groupe aryle ayant de 5 à 12 atomes de carbone qui est éventuellement substitué et dans lequel un ou plusieurs atomes de carbone peuvent être remplacés par de l'azote, du soufre et/ou de l'oxygène,
a) un groupe alcoxy ayant de 1 à 12 atomes de carbone,
- Rₐ et R_{b} sont identiques ou différents l'un de l'autre et sont choisis parmi les substituants suivants :
a) un groupe alcoyle ayant de 1 à 12 atomes de carbone qui est éventuellement ramifié,
a) un groupe aryle ayant de 5 à 12 atomes de carbone qui est éventuellement substitué et dans lequel un ou plusieurs atomes de carbone peuvent être remplacés par de l'azote, du soufre et/ou de l'oxygène,
a) un groupe alcoxy ayant de 1 à 12 atomes de carbone,
- M étant choisi parmi les contre-ions suivants :
a) hydrogène,
a) ions ammonium, NH4⁺ et/ou ions ammonium organiques à substitution alcoyle.

4. Solution d'électrolyte suivant l'une des revendications précédentes,
- dans laquelle le constituant A) contient un sel d'au moins l'un des acides dicarboxyliques cycliques suivants, à l'exception des acides dicarboxyliques symétriques,
a) acide dicarboxylique de formule générale I 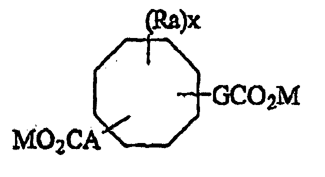 avec 0 ≤ x ≤ 7,
a) acide dicarboxylique ayant la formule II générale suivante, 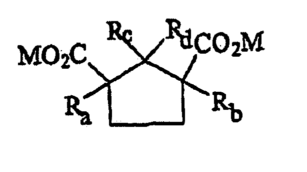
dans laquelle M, A, G, Rₐ et R_{b} ayant la signification mentionnée précédemment, et R_{c} et R_{d} étant choisis parmi le groupe déjà mentionné pour Rₐ et R_{b}.

5. Solution d'électrolyte suivant l'une des revendications 1 à 3,
- dans laquelle le constituant A) comprend de l'acide camphorique et/ou l'acide cyclooctadiène dicarboxylique.

6. Solution d'électrolyte suivant l'une des revendications 1 ou 2,
- dans laquelle le constituant A) contient un sel d'au moins l'un des acides dicarboxyliques polycycliques suivants à la condition que les acides dicarboxyliques symétriques soient exclus :
a) des acides dicarboxyliques ayant la formule suivante : 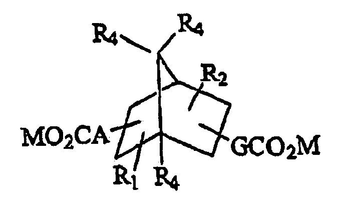
a) des acides dicarboxyliques ayant la formule suivante : 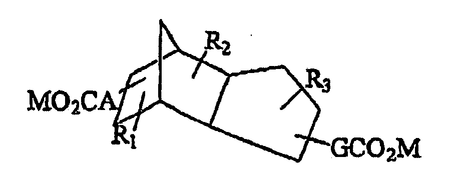
dans laquelle, dans les deux formules, on a :
- A et G sont identiques ou différents l'un de l'autre et représentent un groupe (CR¹²R¹³)ₘ bivalent avec 0 ≤ m s 10, dans lequel les radicaux R¹² et R¹³ sont identiques ou différents l'un de l'autre et sont choisis dans un groupe contenant les substituants suivants :
a) hydrogène,
a) un groupe alcoyle ayant de 1 à 12 atomes de carbone qui est éventuellement ramifié,
a) un groupe aryle ayant de 5 à 12 atomes de carbone qui est éventuellement substitué et dans lequel un ou plusieurs atomes de carbone peuvent être remplacés par de l'azote, du soufre et/ou de l'oxygène,
a) ou un groupe alcoxy ayant de 1 à 12 atomes de carbone,
- R1, R2, R3 et R4 sont identiques ou différents les uns des autres et sont choisis parmi les groupes suivants :
a) hydrogène
a) un groupe alcoyle ayant de 1 à 12 atomes de carbone qui est éventuellement ramifié,
a) un groupe aryle ayant de 5 à 12 atomes de carbone qui est éventuellement substitué et dans lequel un ou plusieurs atomes de carbone peuvent être remplacés par de l'azote, par du soufre et/ou par de l'oxygène,
a) ou un groupe alcoxy ayant de 1 à 12 atomes de carbone, et
- M est choisi dans le groupe des contre-ions suivants :
a) Les ions hydrogène,
a) Les ions ammonium quaternaires, NH4⁺ et/ou les ions ammonium organiques à substitution alcoyle.

7. Solution d'électrolyte suivant l'une des revendications précédentes,
- dans laquelle le constituant B) comprend des dialcools ou des esters cycliques.

8. Solution d'électrolyte suivant la revendication précédente,
- dans laquelle le constituant B) comprend de l'éthylène glycol, du propylène glycol ou de la gamma-butyrolactone.

9. Solution d'électrolyte suivant l'une des revendications précédentes,
- dans laquelle il y a du pentaborate d'ammonium en tant que constituant C) supplémentaire.

10. Solution d'électrolyte suivant la revendication précédente,
- dans laquelle il y a, en plus, de la mannite dans le constituant C).

11. Solution d'électrolyte suivant lune des revendications précédentes,
- dans laquelle le constituant A) est présent en une proportion de la solution d'électrolyte de 1 à 15 % en poids.

12. Solution d'électrolyte suivant la revendication précédente,
- dans laquelle le constituant A) est présent en une proportion de la solution d'électrolyte de 3 à 8 % en poids.

13. Solution d'électrolyte suivant la revendication 10,
- dans laquelle le constituant A) comprend du cyclopentanedioate de diammonium,
- dans laquelle le constituant B) comprend l'éthylène glycol,
- dans laquelle le constituant C) comprend du pentaborate d'ammonium et de la mannite.

14. Condensateur d'électrolyte ayant une solution d'électrolyte suivant l'une des revendications précédentes qui a un enroulement ayant une couche (1) d'anode et une couche (2) de cathode, ainsi qu'une couche (3) de séparation interposée entre elles et imprégnée de la solution d'électrolyte, dans lequel la couche (1) d'anode a une couche (4) d'oxyde du côté tourné vers la couche (3) de séparation.

15. Utilisation d'un condensateur électrolytique suivant la revendication précédente,
- pour un domaine de tension ayant des tensions nominales comprises entre 350 et 600 volts.
